# EUROPEAN PATENT SPECIFICATION

(11) **EP 0 758 919 B1**
(45) Date of publication and mention of the grant of the patent: **01.08.2001**
(21) Application number: 95918861.6
(22) Date of filing: 01.05.1995
(51) Int. Cl.: B01J 21/04, B01J 35/10, B01J 27/188, B01J 23/85, C10G 47/12, B01J 37/02, B01J 38/68

(54) **HIGH ACTIVITY CATALYSTS**
HOCHAKTIVE KATALYSATOREN
CATALYSEURS A HAUTE ACTIVITE

(30) Priority: 13.05.1994 WO PCT/US94/05293
(43) Date of publication of application: 26.02.1997
(60) Divisional application: 98114555.0
(73) Proprietor: CYTEC TECHNOLOGY CORP., Wilmington, Delaware 19801 (US)
(72) Inventor: SHUKIS, Peter, Joseph, Bethany, CT 06524 (US); CARRUTHERS, James, Donald, Fairfield, CT 06430 (US); LOSTAGIO, Vincent, Joseph, Stamford, CT 06901 (US)
(74) Representative: Findlay, Alice Rosemary
(86) International application number: US9505212
(87) International publication number: WO9531280

(56) References cited:
- EP-A- 0 224 947
- EP-A- 0 309 046
- US-A- 4 305 811
- US-A- 4 444 905
- US-A- 5 047 379
- US-A- 5 087 596
- US-A- 5 094 993
- US-A- 5 248 412

## Description

The present invention relates generally to high activity catalysts based upon gamma alumina-containing substrates impregnated with one or more catalytically active metals, and uses thereof in the treatment of hydrocarbons.

The art relating to particulate porous gamma alumina containing supports, impregnating such supports with various catalytically active metals, metal compounds and/or promoters, and various uses of such impregnated supports as catalysts, is extensive and relatively well developed. As a few of the many exemplary disclosures relating to these fields may be mentioned the following United States patents: 2935463, 3032514, 3124418, 3152865, 3232887, 3287280, 3297588, 3493493, 3749664, 3778365, 3897365, 3909453, 3983197, 4090874, 4090982, 4154812, 4179408, 4255282, 4328130, 4357263, 4402865, 4444905, 4447556, 4460707, 4530911, 4588706, 4591429, 4595672, 4652545, 4673664, 4677085, 4732886, 4797196, 4861746, 5002919, 5186818, 5232888, 5246569 and 5248412.

While the prior art shows a continuous modification and refinement of such catalysts to improve their catalytic activity, and while in some cases highly desirable activities have actually been achieved, there is a continuing need in the industry for even higher activity catalysts, which are provided by the present invention.

As an example of this need may be mentioned the need for a higher activity first stage hydrocracking catalyst. In a typical hydrocracking process, higher molecular weight hydrocarbons are converted to lower molecular weight fractions in the presence of a hydrocracking catalyst which is normally a noble metal-impregnated silica-alumina/zeolite. State-of-the-art hydrocracking catalysts possess a very high activity and are capable of cracking high volume throughputs. Such catalysts, however, are highly sensitive to contaminants such as sulfur, metals and nitrogen compounds, which consequently must be removed from the hydrocarbon stream prior to the cracking. This is accomplished in first stage hydrocracking processes such as hydrodenitrogenation, hydrodesulfurization and hydrodemetallation. Hydrotreating catalysts utilized in these processes are typically a combination Group VIB and Group VIII metal impregnated alumina substrate. State-of-the-art hydrotreating catalysts, however, are not sufficiently active to allow processing of the same high volume throughputs as can be processed by the hydrocracking catalysts. As such, the first stage hydrocracking processes form a bottleneck in the overall hydrocracking process, which must be compensated, for example, in the size of the hydrotreating unit relative to the hydrocracking unit.

In accordance with the present invention there is provided a catalyst composition comprising a particulate porous support containing gamma alumina having a crystallite size of greater than 30Å, the catalyst composition having a surface area of at least 100 square meters per gram as measured by nitrogen adsorption, and a pore volume of at least 0.25 cubic centimeters per gram as measured by mercury porosimetry, and impregnated with one or more catalytically active metals, wherein there is located at the surface of said catalyst composition a nanocrystalline phase of alumina of a crystallite size of from 8Å to 25Å, and wherein the catalyst composition possesses an at least bimodal mesopore structure.

In preferred embodiments the catalyst compositions of this invention display a relative volume activity (RVA) of at least 115, preferably at least 120, and especially at least 125, in a first stage hydrocracking process as measured by the procedure described in the article by Carruthers and DiCamillo, "Pilot Plant Testing of Hydrotreating Catalysts," Applied Catalysts, 43 (1988) 253-276, utilizing as the standard a catalyst commercially available under the trade designation HC-H (as of May 1994) from Unocal Corporation, Brea, CA.

A catalyst composition in accordance with the present invention can be prepared from a particulate porous support comprising gamma alumina and amorphous alumina, having a surface area of at least 100 square meters as measured by nitrogen adsorption and a pore volume of at least 0.25 cubic centimeters per gram as measured by mercury porosimetry, by a process which comprises the steps of:
(1) wetting the porous support by contact with a chelating agent in a carrier liquid;
(2) aging the so-wetted support while wet;
(3) drying the so-aged support at a temperature and under conditions to substantially volatilize the carrier liquid; and
(4) calcining the so-dried support.
This process, which is the subject of European Patent Application No. 98114555.0 (Publication No. 0882503) divided herefrom, can readily be applied to existing catalysts comprising a particulate porous support containing gamma alumina and amorphous alumina, or can be utilized in a catalyst manufacture process prior to, concurrently with and/or subsequent to the impregnation of the support containing gamma alumina and amorphous alumina, with one or more catalytically active metals and/or compounds thereof.

By performing these steps in the indicated order, it is believed (without wishing to be bound by any particular theory) that an interaction takes place between at least the amorphous alumina, chelating agent and catalytically active components, resulting in the appearance of a nanocrystalline phase of alumina of a crystallite size at the surface of the catalyst of between 8Å and 25Å, in combination with the gamma alumina which has a crystallite size at the surface of the catalyst of greater than 30Å, and typically in the range of 30Å to 70Å. Crystallite size of the catalyst surface can be measured via well-known techniques involving transmission electron microscopy.

Concurrent with the appearance of this nanocrystalline phase, an increase in the surface area of the catalyst is also achieved. In addition, an at least bimodal mesopore structure is generated with a porosity peaking in a first region of pore size 40Å or less, and more preferably in the range of 20Å to 40Å, and in a second region of pore size 50Å or greater, and more preferably in the range of 50Å to 150Å, as measured by nitrogen porosimetry using the desorption isotherm.

The resulting high activity catalysts find use in a wide variety of fields as detailed in the many previously mentioned U.S. patents. A particularly preferred use is as a first stage hydrocracking catalyst in hydrodenitrogenation, hydrodesulfurization and hydrodemetallation.

The invention will now be described in more detail below.

### Porous Support

As indicated above, supports suitable for use in preparing the catalyst composition of the prevent invention are particulate porous supports which comprise at least in part gamma alumina and amorphous alumina, and preferably at least 5 wt% amorphous alumina based on the weight of the support. As specific examples may be mentioned substantially alumina supports, as well as composite supports in which the alumina acts at least in part as a carrier for other substrates such as silica-aluminas and zeolites. Such supports and their methods of manufacture are in general well-known to those of ordinary skill in the art, as exemplified by the many previously mentioned U.S. patents.

### Catalytically Active Metals

The present invention is applicable to catalysts impregnated with one or more of a wide variety of catalytically active metals well-known to those of ordinary skill in the art as exemplified, for example, by the numerous previously mentioned U.S. patents. In the context of the present invention, "catalytically active metals" includes both the metals themselves as well as metal compounds. In addition to the catalytically active metals, the catalysts may also be impregnated with one or more well-known promoters such as phosphorous, tin, silica and titanium (including compounds thereof).

Typically, the catalytically active metals are transition metals selected from the Group VIB metals, Group VIII metals and combinations thereof. The specific choice of metal(s), promoter(s) and loadings, of course, depends upon the desired end use of the catalyst composition and these variables can readily be adjusted by those of ordinary skill in the art based upon the end use. As specific examples thereof may be mentioned the following (wt% is based on the total catalyst weight):
Hydrotreating Operations
   - Hydrodenitrogenation: Ni and/or Co, and preferably Ni, in an amount up to 7 wt% calculated as NiO and/or CoO
   Mo and/or W, preferably Mo, in an amount up to 35 wt% calculated as MoO₃ and/or WO₃
   optionally P, and preferably including P, in an amount up to 10 wt% calculated as P₂O₅
   - Hydrodesulfurization: Ni and/or Co, and preferably Co, in an amount up to 9 wt% calculated as NiO and/or CoO
   Mo and/or W, preferably Mo, in an amount up to 35 wt% calculated as MoO₃ and/or WO₃
   optionally P, and preferably including P, in an amount up to 10 wt% calculated as P₂O₅
   - Hydrodemetallation: optionally Ni and/or Co, and preferably including Ni and/or Co, in an amount up to 5 wt% calculated as NiO and/or CoO
   Mo and/or W, preferably Mo, in an amount up to 20 wt% calculated as MoO₃ and/or WO₃
   optionally P, and preferably including P, in an amount up to 10 wt% calculated as P₂O₅
   - Hydroconversion: Ni and/or Co, and preferably Ni, in an amount up to 5 wt% calculated as NiO and/or CoO
   Mo and/or W, preferably Mo, in an amount up to 20 wt% calculated as MoO₃ and/or WO₃
   optionally P, and preferably including P, in an amount up to 6 wt% calculated as P₂O₅
   - Hydrocracking: Ni and/or Co, and preferably Ni, in an amount up to 5 wt% calculated as NiO and/or CoO
   Mo and/or W, preferably Mo, in an amount up to 20 wt% calculated as MoO₃ and/or WO₃
   optionally P, and preferably including P, in an amount up to 10 wt% calculated as P₂O₅
   - Hydrogenation/ Dehydrogenation: a noble metal, and preferably Pt or Pt in combination with Rh, in an amount up to 2 wt% calculated on an elemental basis
   - Reforming: a noble metal, and preferably Pt or Pt in combination with another noble metal such Re and/or Ir, and/or Sn, in an amount up to 2 wt% calculated on an elemental basis
Non-Hydrotreating Operations
   - Isomerization: a noble metal, and preferably Pt or Pt in combination with another noble metal, in an amount up to 2 wt% calculated on an elemental basis
   - Klaus Process: Ni and/or Co, and preferably Ni, in an amount up to 5 wt% calculated as NiO and/or CoO
   Mo and/or W, preferably Mo, in an amount up to 20 wt% calculated as MoO₃ and/or WO₃
   optionally P, and preferably including P, in an amount up to 6 wt% calculated as P₂O₅.

Such catalyst compositions are prepared by impregnating the porous supports with the appropriate components, followed by various drying, sulfiding and/or calcining steps as required for the appropriate end use. Such catalyst preparation is generally well-known to those of ordinary skill in the relevant art, as exemplified by the numerous previously mentioned U.S. patents, and further details may be had by reference thereto or numerous other general reference works available on the subject.

### The Process for Preparing the Catalyst Composition

As indicated above, the catalyst composition of the present invention can be prepared from a particulate porous support comprising gamma alumina and amorphous alumina by a process which comprises the steps of:
(1) wetting the porous support by contact with a chelating agent in a carrier liquid, said wetting step being conducted prior to, concurrently with and/or subsequent to the impregnation of said support with one or more catalytically active metals;
(2) aging the so-wetted and impregnated support while wet;
(3) drying the so-aged support at a temperature and under conditions to substantially volatilize the carrier liquid; and
(4) calcining the so-dried support.

Chelating agents suitable for use in this process include those known to form more stable complexes with transition metals and aluminum and, consequently, possess high stability constants with respect thereto. Particularly preferred for use in the present invention is ethylenediaminetetraacetic acid (EDTA) and derivatives thereof including, for example, N-hydroxy ethylenediaminetetraacetic acid and diammonium ethylenediaminetetraacetic acid. Also suitable are tris(2-aminoethyl)amine and triethylenetetraamine. Other candidates include diethylenetriaminepentaacetic acid, cyclohexanediaminetetraacetic acid, ethyleneglycol-bis-(beta-aminoethylether)-N,N'-ettetraacetic acid, tetraethylenepentaamine and the like. The suitability of other chelating agents can be readily determined by those of ordinary skill in the art by treating a catalyst sample in accordance with the present invention and then determining with the aid of transmission electron microscopy whether or not the nanocrystalline alumina structure of appropriate crystallite size has formed.

The amount of chelating agent utilized is not critical to obtaining the effect, but does have an influence on the degree of effect. Widely varying amounts of chelating agent can be utilized depending on a number of factors such as solubility in the carrier liquid, type of catalyst support and metals impregnated or to be impregnated thereon. Generally, the support should be wetted by a carrier liquid containing the chelating agent in amounts ranging from 0.01-1.0 grams of chelating agent per gram of catalyst composition.

The support may be wetted by any normal method such as dipping or spraying. To ensure adequate infiltration of the chelating agent, dipping is preferred followed by a soaking period. The preferred carrier liquid is water or a water/ammonia solution.

In the production of new catalyst, the support can be wetted with the chelating agent/carrier liquid either prior to, concurrently with and/or subsequent to the impregnation of the support with the appropriate catalytically active metals, followed by steps (2) through (4) as described above. It is only important to ensure that the aging step takes place while the impregnated support is wet from the carrier liquid for the chelating agent and/or impregnation metals.

Aging of the support is a function of the temperature during aging. At room temperature, it is preferred to age the wetted support for at least 10 days, more preferably at least 14 days. As temperature increases, the required aging time decreases. At 60°C, it is preferred to age the wetted support for at least one day, more preferably at least three days. The aging can be further accelerated to as little as one hour by heating the wetted sampling in a microwave oven. Preferably aging is accomplished at a temperature in the range of 20°C to 90°C.

Subsequently, the aged support is dried to substantially remove the carrier liquid. It is preferred that the drying take place rapidly at elevated temperatures in the range of 100°C to 250°C. Preferably, a forced air heater is utilized to speed drying to a preferred time of less than one hour.

The so-dried catalyst is then calcined under conditions well-known to those of ordinary skill in the art. Preferably, however, the calcination takes place in two stages - a first lower temperature stage in which the temperature is sufficiently high to drive off or decompose any remaining chelating agent, but which is not so high that the chelating agents combusts to form carbonaceous deposits. This first stage temperature will vary depending on the particularly chelating agent, but typically a temperature within the range of 250°C to 350°C will be sufficient. Once any remaining chelating agent is substantially removed, the catalyst may then be calcined under the normal higher temperature conditions commonly utilized.

As already stated above, the above described process can also be readily applied to existing catalysts comprising a particulate porous support containing gamma alumina and amorphous alumina.

The present invention as described above will be further exemplified by the following specific examples which are provided by way of illustration and not limitation thereof.

The abbreviations in these examples have the following meanings:
- EDTA: ethylenediaminetetraacetic acid
- MEA: monoethanolamine
- SA(N₂): surface area measured by nitrogen adsorption
- SA/gAl₂O₃: surface area per gram alumina
- RVA: relative volume activity in a 1st stage hydrocracking test, measured as described in the article by Carruthers and DiCamillo, "Pilot Plant Testing of Hydrotreating Catalysts," Applied Catalysts, 43 (1988) 253-276. The relative volume activity is determined utilizing as the standard a catalyst commercially available (as of May 1994) under the trade designation HC-H from Unocal Corporation, Brea, CA.
- RWA: relative weight activity, determined in accordance with the aforementioned article.

### EXAMPLE 1

266 grams of an alumina catalyst support, commercially available from Criterion Catalyst Company (Houston, TX), prepared from alumina powder containing some amorphous alumina hydrate, and with a pore volume of 0.62 cc/g (as measured by mercury porosimetry) and pore size peaking at 78Å (as measured by nitrogen porosimetry using the desorption isotherm), were placed in a stainless basket and dipped into 1800 mis. of an aqueous impregnating solution. The impregnating solution, identified as solution 'A', was prepared by dissolving 900 grams of molybdenum trioxide and 221 grams of nickel oxide in a dilute solution of phosphoric acid (263 grams of 85% solution in 1509g of Dl water). To the solution was added 226 grams of solid EDTA. The solution was then recirculated over the alumina support for one hour. The wet impregnated support was then removed from the basket and centrifuged.

The wet support was split into four lots and allowed to age in a sealed container at room temperature for 2 hours, 3 days, 14 days and 22 days. Following this, each lot was dried using either a standard drying procedure (250 °F (121 °C) for 1 hour) or a fast drying procedure (300 °F (149 °C) for 20 mins. with high air flow). Each sample was then transferred to a muffle fumace and calcined at 850 °F (454 °C) for 1 hour. The resulting catalysts are identified as E1, E2, E3, E4 and E5 in Table 1 below.

A second series of catalysts was prepared in an identical manner as above except that in place of the EDTA was added 94.3 grams of MEA. The wet impregnated support was split into two portions and aged at room temperature for 2 hours and 15 days. The catalysts were dried using the Fast Dry procedure and calcined as described above. The resulting catalysts are identified as M1 and M2 respectively in Table 1.

A third series of catalysts prepared in an identical manner as set forth above, except that in place of the EDTA was added 183 grams of succinic acid. The wet impregnated support was then split into two portions and aged at room temperature for 2 hours and 18 days. The catalysts were dried using the Fast Dry procedure and calcined as described above. The resulting catalysts are identified as S1 and S2 respectively in Table 1.

A fourth series of catalysts was prepared in an identical manner as set forth above, except that in place of the EDTA was added 216 grams of citric acid. The wet impregnated support was then split into three portions and aged at room temperature for 2 hours, 2 days and 9 days. The catalysts were dried using the Fast Dry procedure and calcined as described above. The resulting catalysts are identified as C1, C2 and C3 in Table 1.

Finally, a control series of catalysts was prepared in an identical manner as set forth above, except that no EDTA was added. The wet impregnated support was split into two portions and aged at room temperature for 2 hours and 12 days. The catalysts were dried using the Fast Dry procedure and calcined as described above. The resulting catalysts are identified in Table 1 below as A1 and A2.

Although some surface area increase was measured for each of the samples aged beyond 10 days, only one chelating agent of this set, EDTA, brought about a significant increase in catalytic activity (samples E4 and E5). Similarly, in parallel with the catalyst activity results, Analytical Electron Microscopy (AEM) showed clear evidence for the presence of the "nanocrystalline" phase of alumina in the EDTA treated and aged samples but not in the alumina of the other samples treated with other agents, nor in the alumina of the untreated samples A1 and A2.

**TABLE 1**

| **Sample** | | **Age** | **Drying** | **SA(N**_{**2**}**)** | **RVA-TN** |
|---|---|---|---|---|---|
| **ID** | **Agent** | **Time** | **Method** | **m**^{**2**}**/g** | **%** |
| E1* | EDTA | 2 hrs | Fast dry | 163 | 94 |
| E2* | EDTA | 3 days | Fast dry | 198 | 87 |
| E3* | EDTA | 14 days | Slow dry | 192 | 107 |
| E4 | EDTA | 14 days | Fast dry | 195 | 120 |
| E5 | EDTA | 22 days | Fast dry | 203 | 125 |
| | | | | | |
| M1* | MEA | 2 hrs | Fast dry | 179 | 100 |
| M2* | MEA | 15 days | Fast dry | 187 | 109 |
| | | | | | |
| S1* | Suc.acid | 2 hrs | Fast dry | 180 | 103 |
| S2* | Suc.acid | 18 days | Fast dry | 201 | 110 |
| | | | | | |
| C1* | Citric acid | 2 hrs | Fast dry | 181 | 92 |
| C2* | Citric acid | 2 days | Fast dry | 186 | 110 |
| C3* | Citric acid | 9 days | Fast dry | 206 | 100 |
| | | | | | |
| A1* | None | 2 hrs | Fast dry | 160 | 98 |
| A2* | None | 12 days | Fast dry | 170 | 101 |

| | | | | | |
|---|---|---|---|---|---|
| * Comparative sample | | | | | |

### EXAMPLE 2

188 grams of the alumina support described in Example 1 was processed with 1300 ml. of solution 'A' in an identical manner to in Example 1, except that in place of the EDTA was added 100 grams of solid diammonium-EDTA.

The wet impregnated support was split into two lots, and one portion allowed to age at room temperature (68°F, 20°C) for 2 hours while a second portion was placed in a sealed container and aged at 140°F (60°C) for 17 hours. The two portions were dried at 450°F (232°C) for 20 mins. prior to finishing in a calciner at 800°F (427°C). The samples are identified in Table 2 as DE1 and DE2 respectively.

The sample aged for 17 hrs. at 140°F (60°C) and fast-dried exhibited high catalytic activity, similar to that obtained using the EDTA acid in Example 1 above.

**TABLE 2**

| **Sample** | **Age Time** | **Age Temp** | **SA(N2)** | **SA/gAl**_{**2**}**O**_{**3**} | **RVA-TN** |
|---|---|---|---|---|---|
| **ID** | **hours** | **°F (°C)** | **m**^{**2**}**/g** | **m**^{**2**}**/g** | **%** |
| DE1* | 2 | 68(20) | 164 | 253 | 100 |
| DE2 | 17 | 140 (60) | 170 | 262 | 120 |

| | | | | | |
|---|---|---|---|---|---|
| * Comparative sample | | | | | |

### EXAMPLE 3

100 grams of the alumina support described in Example 1 was impregnated by saturating the pore structure of the support with solution 'B', prepared by adding 46.7 grams of a solution 'C' comprising 36.8 wt.% molybdenum trioxide, 6.5 wt.% nickel oxide and 10.0 wt.% phosphorus pentoxide to 30 grams of a 44.7 wt.% solution of diammonium EDTA and 23 mis. of concentrated (29 wt.%) ammonia. The material was then aged for 2 hours and dried in a two step process, first at 250°F (121°C) for 2 hours and then at 500°F (260°C) for a further 2 hours.

The dried catalyst was then subjected to a second pore saturation using solution 'D', which comprised 46.7 grams of solution 'C' diluted with 23 mls. of water. The wet impregnated support was then aged in a sealed vessel at 158°F (70°C) for 18 hours in an oven. The catalyst was Fast Dried and calcined in the same manner as described before. The catalyst is designated 'F1' in Table 3.

**TABLE 3**

| **Sample** | **NiO** | **MoO**_{**3**} | **P**_{**2**}**O**_{**5**} | **SA(N**_{**2**}**)** | **SA/gAl**_{**2**}**O**_{**3**} | **RVA-TN** |
|---|---|---|---|---|---|---|
| **ID** | **wt%** | **wt%** | **wt%** | **m**^{**2**}**/g** | **m**^{**2**}**/g** | **%** |
| F1 | 3.86 | 24.2 | 5.75 | 200 | 303 | 121 |

### EXAMPLE 4

750 grams of an alumina catalyst support commercially available from Criterion Catalyst Company (Houston, TX) prepared from alumina powder containing some amorphous alumina hydrate with a pore volume of 0.78 cc/g and a pore size of 82 angstroms was placed in a stainless basket and dipped into 5300 ml. of a solution 'E' comprising 32 wt.% molybdenum trioxide, 7.2 wt.% nickel oxide and 10.7 wt.% phosphoric acid. The solution was then recirculated over the alumina support for one hour after which the wet support was removed from the basket and centrifuged.

The wet impregnated support was allowed to age for 2 hours at room temperature and then dried at 250°F (121°C) in an oven and calcined at 800°F (427°C) for 1 hour.

Seven 100 gram samples of the finished catalyst were then subjected to pore volume saturation using eight different aqueous solutions of chelating agents:
(1) 7.6g. of Ethylenediamine-N,N-diacetic acid in 47 ml. of solution.
(2) 8.25g. of Nitrilotriacetic acid in 37 ml. of solution.
(3) 12.7g of tris-(2-aminoethyl)amine in 37 ml. of solution.
(4) 8.0g. of Ethylenediamine in 38 ml. of solution.
(5) 8.0g. of Ethylene Glycol in 37 ml. of solution.
(6) 11.5g. of Triethylene tetramine in 37 ml. of solution.
(7) 31.5g. of a 44.7 wt.% diammonium ethylenediamine tetraacetic acid solution in 40 ml. of solution.

Each sample was then aged at 167°F (75°C) in a sealed container for 3 days, allowed to cool and then Fast Dried at 450°F (232°C) for 20 mins. prior to final calcination at 850°F (454°C). Each catalyst was then analyzed and activity tested in the 1st. Stage Hydrocracking catalyst test for nitrogen removal (Table 4).

**TABLE 4**

| | **S.A(N**_{**2**}**)** | **SA/gAl**_{**2**}**O**_{**3**} | **RVA** |
|---|---|---|---|
| | **m**^{**2**}**/g** | **m**^{**2**}**/g** | **%** |
| *(1) Ethylenediamine-N,N-diacetic acid | 143 | 242 | 108 |
| *(2) Nitrilotriacetic acid | 173 | 293 | 102 |
| (3) Tris(2-aminoethyl) amine | 166 | 281 | 133 |
| *(4) Ethylene Diamine | 167 | 283 | 106 |
| *(5) Ethylene Glycol | 137 | 232 | 106 |
| (6) Triethylene tetramine | 160 | 271 | 126 |
| (7) Diammonium EDTA | 205 | 347 | 137 |
| *(8) No chelating agent | 132 | 224 | 101 |

| | | | |
|---|---|---|---|
| *Comporative Sample | | | |

### EXAMPLE 5

150 grams of an alumina catalyst support commercially available from Criterion Catalyst Company (Houston, TX) prepared from alumina powder containing some amorphous alumina hydrate with a pore volume of 0.71 cc/g and a pore size of 78 angstroms was pore saturated with a solution 'F' containing 240 grams of diammonium-EDTA in 1 liter of aqueous solution. A second 150 gram sample of support was then pore saturated with a 66:33 solution 'F': water mixture. A third 150 gram sample was then prepared by pore saturation with a 50:50, solution 'F': water mixture.

Each of the wet impregnated supports was then allowed to stand for 2 hours followed by drying in an air oven at 450°F (232°C). Each dried material was then placed in a stainless basket and dipped into 1200 ml. of solution 'E' (see Example 4). The solution was then recirculated over the dried alumina support containing the diammonium-EDTA for one hour after which the pills were centrifuged and allowed to age in a sealed container for 64 hours at 140°F (60°C). The wet catalyst was then fast dried at 450°F (232°C) for 20 minutes in air, and calcined at 800°F (427°C) for one hour.

The finished catalysts differed in surface area on both a "per gram of catalyst" basis as well as on a "per gram of alumina" basis. The catalyst activities in the hydrodenitrogenation test declined stepwise, paralleling the decreasing catalyst surface areas and the corresponding decreasing concentrations of pre-impregnated diammonium-EDTA (Table 5).

**TABLE 5**

| | **S.A(N**_{**2**}**)** | **SA/gAl**_{**2**}**O**_{**3**} | **RVA** | **RWA** |
|---|---|---|---|---|
| | **m**^{**2**}**/g** | **m**^{**2**}**/g** | **%** | **%** |
| 100% Sol 'F' | 240 | 350 | 124 | 137 |
| 66% Sol 'F' | 207 | 314 | 116 | 124 |
| 50% Sol 'F' | 198 | 301 | 118 | 124 |

### EXAMPLE 6

150 grams of the alumina support described in Example 4 was pore saturated with a solution 'G' containing 48 grams of diammonium-EDTA, 9 grams of 29 wt.% ammonium hydroxide and 12.7 grams of nickel nitrate hexahydrate in 114 ml. of aqueous solution. The wet material was allowed to stand for 2 hours before being dried at 250°F (121°C) for 1 hour in an air oven followed by drying at 375°F (191°C) for 1 hour. The dried material was then placed in a stainless basket and dipped into a solution 'H' containing 35.6 wt.% molybdenum trioxide, 9.1 wt.% phosphoric acid and 7.3 wt.% nickel oxide. The solution was then recirculated over the dried alumina support containing the diammonium-EDTA for one hour after which the pills were centrifuged. The resulting material was split into two parts, with one part allowed to age at room temperature for three weeks (sample 6A) while the other part was placed in a sealed container and allowed to age for 72 hours at 167°F (75°C) (sample 6B). Both parts were subsequently fast dried at 450°F (232°C) for 20 mins. and calcined in two stages: at 575°F (302°C) for 30 minutes followed by 850°F (454°C) for one hour. The finished catalysts exhibited very similar surface areas and high activities in the hydrodenitrogenation test (Table 6).

### EXAMPLE 7

200 grams of the alumina support described in Example 4 was pore saturated with a solution 'J' containing 48 grams of diammonium-EDTA, 15.3 grams of 29 wt.% ammonium hydroxide and 62 grams of solution 'K' comprising 32.8 wt.% molybdenum trioxide, 5.9 wt.% nickel oxide and 9.0 wt.% phosphoric acid. The wet impregnated support was then allowed to stand for 2 hours and dried, first at 250°F (121°C) for 1 hour and then at 450°F (232°C) for 1 hour. The dried material was then placed in a stainless basket and dipped into 1400 ml of solution 'H'. The solution was then recirculated over the dried alumina support containing the diammonium-EDTA for one hour after which the pills were centrifuged. The resulting material was allowed to age in a sealed container for 3 days at 167°F (75°C) (sample 7A), and was subsequently fast dried at 450°F (232°C) for 20 minutes and calcined in two stages as set forth in Example 6. The surface area enhancement and catalyst activity in the hydrodenitrogenation test were both very high. The results are also shown in Table 6.

**TABLE 6**

| **Sample** | **Age Time** | **Age Temp** | **SA(N**_{**2**}**)** | **SA/gAl**_{**2**}**O**_{**3**} | **RVA-TN** |
|---|---|---|---|---|---|
| **ID** | **hours** | **°F (°C)** | **m**^{**2**}**/g** | **m**^{**2**}**/g** | **%** |
| 6A | 72 | 167 (75) | 244 | 402 | 132 |
| 6B | 504 | 68 (20) | 208 | 343 | 134 |
| 7A | 161 | 167 (75) | 259 | 401 | 136 |

### EXAMPLE 8

300 grams of the alumina support described in Example 4 was pore saturated with a solution containing 80 grams of diammonum EDTA, 25.2 grams of 29 wt.% ammonium and 92 grams of solution 'K' (see Example 7). The wet impregnated support was then allowed to stand for 2 hours and dried first at 250°F (121°C) for 1 hour then at 450°F (232°C) for another hour. The dried material was then placed in a stainless steel basket and dipped into 1900 ml. of solution 'H'. The solution was then recirculated over the dried alumina support containing the diammonium-EDTA for one hour after which the pills were centrifuged. The resulting material was split into two portions, with one part allowed to age for 16 hrs. at 167°F (75°C) (sample 9A) while the second part was aged for 1 hour in a sealed container in a Microwave oven set to control the temperature of the catalyst at 167°F (75°C) (sample 9B). The samples were subsequently Fast Dried and calcined as before. The surface area enhancement and catalytic activities for the two materials were both good (Table 7).

**TABLE 7**

| **Sample** | **Age Time** | **Age Temp** | **SA(N**_{**2**}**)** | **SA/gAl**_{**2**}**O**_{**3**} | **RVA-RN** |
|---|---|---|---|---|---|
| **ID** | **hours** | **°F (°C)** | **m**^{**2**}**/g** | **m**^{**2**}**/g** | **%** |
| 9A | 1 | 167 (75) | 173 | 284 | 125 |
| 9B | 16 | 167 (75) | 189 | 306 | 127 |

### EXAMPLE 9

310 grams of a commercially regenerated used sample of Criterion C-424 catalyst (Criterion Catalyst Company, Houston, TX) was pore saturated with a solution containing 54.7 grams of diammonium EDTA. The sample was then aged at 140°F (60°C) in a sealed container for 4 days followed by Fast Drying and calcination as before (sample 10A). Both the commercially regenerated sample of C-424 (sample 10B) and the EDTA-treated sample were activity tested in a test designed to compare the performance of catalysts in Catalytic Hydrotreatment of feedstock prior to Fluid Cat. Cracking (a CFH test). Results of the test and the test conditions are shown in Table 8. It can be seen that the EDTA-treated regenerated catalyst had a significantly improved performance compared to the regenerated catalyst in both HDS and HDN.

**TABLE 8**

| **Sample ID** | **Description** | **RVA-HDN** | **RVA-HDS** |
|---|---|---|---|
| | | **%** | **%** |
| | **C-424 Fresh** | **100** | **100** |
| **10B** | **Regenerated** | **75** | **69** |
| **10A** | **Regenerated/** | | |
| | **EDTA treated** | **90** | **86** |

| | | |
|---|---|---|
| **CFH Test:** | **Feed** | **Cat. Cracked Heavy Gas Oil** |
| | **H**_{**2**} **Pressure** | **1100 psig (76 atm)** |
| | **H**_{**2**}**/Oil** | **4210 SCF/bbl (0.75 m**^{**3**}**/l)** |
| | **LHSV** | **2 hr**^{**-1**} |
| | **Temperature** | **630°F (332°C)** |

## Claims

1. A catalyst composition comprising a particulate porous support containing gamma alumina having a crystallite size of greater than 30Å, the catalyst composition having a surface area of at least 100 square meters per gram, as measured by nitrogen adsorption, and a pore volume of at least 0.25 cubic centimeters per gram, as measured by mercury porosimetry, and being impregnated with one or more catalytically active metals,
characterized in that there is located at the surface of said catalyst composition a nanocrystalline phase of alumina of a crystallite size of from 8Å to 25Å,
and in that the catalyst composition possesses an at least bimodal mesopore structure.

2. A catalyst composition according to claim 1, wherein the catalyst composition possesses a bimodal mesopore structure with a porosity peaking in a first region of pore size of 40Å or less and a second region of pore size of 50Å or greater, as measured by nitrogen porosimetry using the desorption isotherm.

3. A catalyst composition according to claim 2, wherein the catalyst composition possesses a bimodal mesopore structure with a porosity peaking in a first region of pore size of 20Å to 40Å and a second region of pore size of 50Å to 150Å, as measured by a nitrogen porosimetry using the desorption isotherm.

4. A catalyst composition according to any preceding claim, wherein the support is impregnated with one or more catalytically active transition metals selected from Group VIB and Group VIII metals.

5. A catalyst composition according to any preceding claim, wherein the support is further impregnated with a promoter.

6. A catalyst composition according to claim 5, wherein the promoter is phosphorous.

7. A catalyst composition according to claim 4, wherein the support is impregnated with one or more of nickel, cobalt, molybdenum and tungsten.

8. A catalyst composition according to claim 7, wherein the support is further impregnated with phosphorous.

9. A catalyst composition according to claim 7, wherein the support is impregnated with molybdenum in an amount up to 35 wt% calculated as MoO₃, and cobalt in an amount up to 9 wt% calculated as CoO, wherein wt% is based on the total catalyst weight.

10. A catalyst composition according to claim 9, wherein the support is impregnated with molybdenum in an amount up to 35% calculated as MoO₃, cobalt in an amount up to 9 wt% calculated as CoO, and phosphorous in an amount up to 10 wt% calculated as P₂O₅, wherein wt% is based on the total catalyst weight.

11. A catalyst composition according to claim 7, wherein the support is impregnated with molybdenum in an amount up to 35 wt% calculated as MoO₃, and nickel in an amount of up to 7 wt% calculated as NiO, wherein wt% is based on the total catalyst weight.

12. A catalyst composition according to claim 11, wherein the support is impregnated with molybdenum in an amount up to 35 wt% calculated as MoO₃, nickel in an amount of up to 7 wt% calculated as NiO, and phosphorous in an amount up to 10 wt% calculated as P₂O₅, wherein wt% is based on the total catalyst weight.

13. A catalyst composition according to claim 7, wherein the support is impregnated with molybdenum in an amount up to 20 wt% calculated as MoO₃, wherein wt% is based on the total catalyst weight.

14. A catalyst composition according to claim 13, wherein the support is further impregnated with cobalt and/or nickel in an amount up to 5 wt% calculated as CoO and/or NiO, wherein wt% is based on the total catalyst weight.

15. A catalyst composition according to claim 14, wherein the support is further impregnated with phosphorous in an amount up to 10 wt% calculated as P₂O₅, wherein wt% is based on the total catalyst weight.

16. A catalyst composition according to claim 4, wherein the support is impregnated with a noble metal in an amount of up to 2 wt% based on the total weight of the catalyst.

17. A catalyst composition according to claim 16, wherein the nobel metal is platinum.

18. A process for the catalytic hydrodesulfurization of a hydrocarbon-containing feed comprising the step of contacting the feed under hydrodesulfurization conditions with a catalyst composition according to any one of claims 1-15.

19. A process for the catalytic hydrodenitrogenation of a hydrocarbon-containing feed comprising the step of contacting the feed under hydrodenitrogenation conditions with a catalyst composition according to any one of claims 1-15.

20. A process for the catalytic hydroconversion of a hydrocarbon-containing feed comprising the step of contacting the feed under hydroconversion conditions with a catalyst composition according to any one of Claim 1-15.

21. A process for the catalytic hydrodemetallation of a hydrocarbon-containing feed comprising the step of contacting the feed under hydrodemetallation conditions with a catalyst composition according to any ane of claim 1-15.

22. A process for the catalytic hydrocracking of a hydrocarbon-containing feed comprising the step of contacting the feed under hydrocracking conditions with a catalyst composition according to any one of claims 1-15.

23. A process for the catalytic reforming of a hydrocarbon-containing feed comprising the step of contacting the feed under reforming conditions with a catalyst composition according to any one of claims 1-4, 16 and 17.

24. A process for the catalytic hydrogenation-dehydrogenation of a hydrocarbon-containing feed comprising the step of contacting the feed under hydrogenation-dehydrogenation conditions with the catalyst according to any one of claims 1-4, 16 and 17.

25. A process for the catalytic isomerization of a hydrocarbon-containing feed comprising the step of contacting the feed under isomerization conditions with a catalyst composition according to any one of claims 1-4, 16 and 17.

## Patentansprüche

1. Katalysatorzusammensetzung, umfassend einen teilchenförmigen porösen Träger, der gamma-Aluminiumoxid mit einer Kristallitgröße von über 30Å enthält, wobei die Katalysatorzusammensetzung eine Oberfläche von wenigstens 100 Quadratmeter je Gramm, bestimmt durch Stickstoffadsorption, und ein Porenvolumen von wenigstens 0,25 Kubikzentimeter je Gramm, bestimmt durch Quecksilberporosimetrie, aufweist und mit einem oder mit mehreren katalytisch aktiven Metallen imprägniert ist,
dadurch gekennzeichnet, daß an der Oberfläche der Katalysatorzusammensetzung eine nanokristalline Phase aus Aluminiumoxid mit einer Kristallitgröße von 8Å bis 25Å angeordnet ist
und daß die Katalysatorzusammensetzung eine wenigstens bimodale Mesoporenstruktur besitzt.

2. Katalysatorzusammensetzung nach Anspruch 1, worin die Katalysatorzusammensetzung eine bimodale Mesoporenstruktur mit einem Porositätsspitzenwert in einem ersten Porengrößenbereich von 40Å oder darunter und in einem zweiten Porengrößenbereich von 50Å oder- darüber besitzt, bestimmt durch Stickstoffporosimetrie unter Anwendung der Desorptionsisotherme.

3. Katalysatorzusammensetzung nach Anspruch 2, worin die Katalysatorzusammensetzung eine bimodale Mesoporenstruktur mit einem Porositätsspitzenwert in einem ersten Porengrößenbereich von 20Å bis 40Å und in einem zweiten Porengrößenbereich von 50Å bis 150Å besitzt, bestimmt durch Stickstoffporosimetrie unter Anwendung der Desorptionsisotherme.

4. Katalysatorzusammensetzung nach einem der vorstehenden Ansprüche, worin der Träger mit einem oder mit mehreren katalytisch aktiven Übergangsmetallen, ausgewählt unter Gruppe VIB- und Gruppe VIII-Metallen, imprägniert ist.

5. Katalysatorzusammensetzung nach einem der vorstehenden Ansprüche, worin der Träger zusätzlich mit einem Promotor imprägniert ist.

6. Katalysatorzusammensetzung nach Anspruch 5, worin der Promotor Phosphor ist.

7. Katalysatorzusammensetzung nach Anspruch 4, worin der Träger mit einem oder mit mehreren von Nickel, Cobalt, Molybdän und Wolfram imprägniert ist.

8. Katalysatorzusammensetzung nach Anspruch 7, worin der Träger zusätzlich mit Phosphor imprägniert ist.

9. Katalysatorzusammensetzung nach Anspruch 7, worin der Träger mit Molybdän in einer Menge bis zu 35 Gew.-%, berechnet als MoO₃, und mit Cobalt in einer Menge bis zu 9 Gew.-%, berechnet als CoO, imprägniert ist, worin die Gewichtsprozente auf das Katalysatorgesamtgewicht bezogen sind.

10. Katalysatorzusammensetzung Anspruch 9, worin der Träger mit Molybdän in einer Menge bis zu 35 Gew.-%, berechnet als MoO₃, mit Cobalt in einer Menge bis zu 9 Gew.-%, berechnet als CoO, und mit Phosphor in einer Menge bis zu 10 Gew.-%, berechnet als P₂O₅, imprägniert ist, worin die Gewichtsprozente auf das Katalysatorgesamtgewicht bezogen sind.

11. Katalysatorzusammensetzung nach Anspruch 7, worin der Träger mit Molybdän in einer Menge bis zu 35 Gew.-%, berechnet als MoO₃, und mit Nickel in einer Menge bis zu 7 Gew.-%, berechnet als NiO, imprägniert ist, worin die Gewichtsprozente auf das Katalysatorgesamtgewicht bezogen sind.

12. Katalysatorzusammensetzung nac Anspruch 11, worin der Träger mit Molybdän in einer Menge bis zu 35 Gew.-%, berechnet als MoO₃, mit Nickel in einer Menge bis zu 7 Gew.-%, berechnet als NiO, und mit Phosphor in einer Menge bis zu 10 Gew.-%, berechnet als P₂O₅, imprägniert ist, worin die Gewichtsprozente auf das Katalysatorgesamtgewicht bezogen sind.

13. Katalysatorzusammensetzung nach Anspruch 7, worin der Träger mit Molybdän in einer Menge bis zu 20 Gew.-%, berechnet als MoO₃, imprägniert ist, worin die Gewichtsprozente auf das Katalysatorgesamtgewicht bezogen sind.

14. Katalysatorzusammensetzung nach Anspruch 13, worin der Träger weiterhin mit Kobalt und/oder Nickel in einer Menge bis zu 5 Gew.-%, berechnet als CoO und/oder NiO, imprägniert ist, worin die Gewichtsprozente auf das Katalysatorgesamtgewicht bezogen sind.

15. Katalysatorzusammensetzung nach Anspruch 14, worin der Träger zusätzlich mit Phosphor in einer Menge bis zu 10 Gew.-%, berechnet als P₂O₅, imprägniert ist, worin die Gewichtsprozente auf das Katalysatorgesamtgewicht bezogen sind.

16. Katalysatorzusammensetzung nach Anspruch 4, worin der Träger mit einem Edelmetall in einer Menge bis zu 2 Gew.-%, bezogen auf das Gesamtgewicht des Katalysators, imprägniert ist.

17. Katalysator nach Anspruch 16, worin das Edelmetall Platin ist.

18. Verfahren zur katalytischen Hydrodesulfurierung eines kohlenwasserstoffhältigen Einsatzmaterials, umfassend die Stufe des Inkontaktbringens des Einsatzmaterials unter Hydrodesulfurierungsbedingungen mit einer Katalysatorzusammensetzung nach einem der Ansprüche 1 bis 15.

19. Verfahren zur katalytischen Hydrodenitrierung eines kohlenwasserstoffhältigen Einsatzmaterials, umfassend die Stufe des Inktontaktbringens des Einsatzmaterials unter Hydrodenitrierungsbedingungen mit einer Katalysatorzusammensetzung nach einem der Ansprüche 1 bis 15.

20. Verfahren zur katalytischen Hydrokonversion eines kohlenwasserstoffhältigen Einsatzmaterials, umfassend die Stufe des Inkontaktbringens des Einsatzmaterials unter Hydrokonversionsbedingungen mit einer Katalysatorzusammensetzung nach einem der Ansprüche 1 bis 15.

21. Verfahren zur katalytischen Hydrodemetallierung eines kohlenwasserstoffhältigen Einsatzmaterials, umfassend die Stufe des Inkontaktbringens des Einsatzmaterials unter Hydrodemetallierungsbedingungen mit einer Katalysatorzusammensetzung nach einem der Ansprüche 1 bis 15.

22. Verfahren zum katalytischen Hydrocracken eines kohlenwasserstoffhältigen Einsatzmaterials umfassend die Stufe des Inkontaktbringens des Einsatzmaterials unter Hydrocrackbedingungen mit einer Katalysatorzusammensetzung nach einem der Ansprüche 1 bis 15.

23. Verfahren zum katalytischen Reformieren eines kohlenwasserstoffhältigen Einsatzmaterials, umfassend die Stufe des Inkontaktbringens des Einsatzmaterials unter Reformierbedingungen mit einer Katalysatorzusammensetzung nach einem der Ansprüche 1 bis 4, 16 und 17.

24. Verfahren zum katalytischen Hydrieren-Dehydrieren eines kohlenwasserstoffhältigen Einsatzmaterials, umfassend die Stufe des Inkontaktbringens des Einsatzmaterials unter Hydrier-Dehydrierbedingungen mit einer Katalysatorzusammensetzung nach einem der Ansprüche 1 bis 4, 16 und 17.

25. Verfahren zum katalytischen Isomerisieren eines kohlenwasserstoffhältigen Einsatzmaterials, umfassend die Stufe des Inkontaktbringens des Einsatzmaterials unter Isomerisierbedingungen mit einer Katalysatorzusammensetzung nach einem der Ansprüche 1 bis 4, 16 und 17.

## Revendications

1. Composition de catalyseur comprenant un support poreux particulaire contenant de la gamma-alumine ayant une taille de cristallite supérieure à 30 Å, la composition de catalyseur ayant une aire superficielle d'au moins 100 m²/g, telle que mesurée par adsorption d'azote, et un volume des pores d'au moins 0,25 cm³/g, tel que mesuré par porosimétrie au mercure, et étant imprégnée d'un ou plusieurs métaux catalytiquement actifs,
caractérisée en ce qu'est disposée à la surface de ladite composition de catalyseur une phase nanocristalline d'alumine d'une taille de cristallite de 8 Å à 25 Å,
et en ce que la composition de catalyseur présente une structure de mésopore au moins bimodale.

2. Composition de catalyseur suivant la revendication 1, dans laquelle la composition de catalyseur présente une structure de mésopore bimodale avec une porosité atteignant dans une première région une taille de pore de 40 Å ou moins et dans une seconde région une taille de pore de 50 Å ou plus, telle que mesurée par une porosimétrie à l'azote utilisant l'isotherme de désorption.

3. Composition de catalyseur suivant la revendication 2, dans laquelle la composition de catalyseur présente une structure de mésopore bimodale avec une porosité atteignant dans une première région une taille de pore de 20 Å à 40 Å et dans une seconde région une taille de pore de 50 Å à 150 Å, telle que mesurée par une porosimétrie à l'azote utilisant l'isotherme de désorption.

4. Composition de catalyseur suivant l'une quelconque des revendications précédentes, dans laquelle le support est imprégné d'un ou plusieurs métaux de transition catalytiquement actifs choisis parmi les métaux du Groupe VIB et du Groupe VIII.

5. Composition de catalyseur suivant l'une quelconque des revendications précédentes, dans laquelle le support est de plus imprégné d'un promoteur.

6. Composition de catalyseur suivant la revendication 5, dans laquelle le promoteur est du phosphore.

7. Composition de catalyseur suivant la revendication 4, dans laquelle le support est imprégné d'un ou plusieurs métaux choisis parmi le nickel, le cobalt, le molybdène et le tungstène.

8. Composition de catalyseur suivant la revendication 7, dans laquelle le support est de plus imprégné de phosphore.

9. Composition de catalyseur suivant la revendication 7, dans laquelle le support est imprégné de molybdène en une quantité pouvant atteindre 35% en poids calculés en MoO₃, et de cobalt en une quantité pouvant atteindre 9% en poids calculés en CoO, dans laquelle les % en poids sont pris par rapport au poids de catalyseur total.

10. Composition de catalyseur suivant la revendication 9, dans laquelle le support est imprégné de molybdène en une quantité pouvant atteindre 35% en poids calculés en MoO₃, de cobalt en une quantité pouvant atteindre 9% en poids calculés en CoO, et de phosphore en une quantité pouvant atteindre 10% en poids calculés en P₂O₅, dans laquelle les % en poids sont pris par rapport au poids de catalyseur total.

11. Composition de catalyseur suivant la revendication 7, dans laquelle le support est imprégné de molybdène en une quantité pouvant atteindre 35% calculés en MoO₃, et de nickel en une quantité pouvant atteindre 7% en poids calculés en NiO, dans laquelle les % en poids sont pris par rapport au poids de catalyseur total.

12. Composition de catalyseur suivant la revendication 11, dans laquelle le support est imprégné de molybdène en une quantité pouvant atteindre 35% en poids calculés en MoO₃, de nickel en une quantité pouvant atteindre 7% en poids calculés en NiO, et de phosphore en une quantité pouvant atteindre 10% en poids calculés en P₂O₅, dans laquelle les % en poids sont pris par rapport au poids de catalyseur total.

13. Composition de catalyseur suivant la revendication 7, dans laquelle le support est imprégné de molybdène en une quantité pouvant atteindre 20% en poids calculés en MoO₃, dans laquelle les % en poids sont pris par rapport au poids de catalyseur total.

14. Composition de catalyseur suivant la revendication 13, dans laquelle le support est de plus imprégné de cobalt et/ou de nickel en une quantité pouvant atteindre 5% calculés en CoO et/ou NiO, dans laquelle les % en poids sont pris par rapport au poids de catalyseur total.

15. Composition de catalyseur suivant la revendication 14, dans laquelle le support est de plus imprégné de phosphore en une quantité pouvant atteindre 10% calculés en P₂O₅, dans laquelle les % en poids sont pris par rapport au poids de catalyseur total.

16. Composition de catalyseur suivant la revendication 4, dans laquelle le support est imprégné d'un métal noble en une quantité pouvant atteindre 2% en poids par rapport au poids total de catalyseur.

17. Composition de catalyseur suivant la revendication 16, dans laquelle le métal noble est le platine.

18. Procédé d'hydrodésulfuration catalytique d'une alimentation contenant un hydrocarbure, comprenant l'étape de mise en contact de l'alimentation sous des conditions d'hydrodésulfuration avec une composition de catalyseur suivant l'une quelconque des revendications 1 à 15.

19. Procédé d'hydrodénitrogénation catalytique d'une alimentation contenant un hydrocarbure, comprenant l'étape de mise en contact de l'alimentation sous des conditions d'hydrodénitrogénation avec une composition de catalyseur suivant l'une quelconque des revendications 1 à 15.

20. Procédé d'hydroconversion catalytique d'une alimentation contenant un hydrocarbure, comprenant l'étape de mise en contact de l'alimentation sous des conditions d'hydroconversion avec une composition de catalyseur suivant l'une quelconque des revendications 1 à 15.

21. Procédé d'hydrodémétallation catalytique d'une alimentation contenant un hydrocarbure, comprenant l'étape de mise en contact de l'alimentation sous des conditions d'hydrodémétallation avec une composition de catalyseur suivant l'une quelconque des revendications 1 à 15.

22. Procédé d'hydrocraquage catalytique d'une alimentation contenant un hydrocarbure, comprenant l'étape de mise en contact de l'alimentation sous des conditions d'hydrocraquage avec une composition de catalyseur suivant l'une quelconque des revendications 1 à 15.

23. Procédé de reformage catalytique d'une alimentation contenant un hydrocarbure, comprenant l'étape de mise en contact de l'alimentation sous des conditions de reformage avec une composition de catalyseur suivant l'une quelconque des revendications 1-4, 16 et 17.

24. Procédé d'hydrogénation-déshydrogénation catalytique d'une alimentation contenant un hydrocarbure, comprenant l'étape de mise en contact de l'alimentation sous des conditions d'hydrogénation-déshydrogénation avec la composition de catalyseur suivant l'une quelconque des revendications 1-4, 16 et 17.

25. Procédé d'isomérisation catalytique d'une alimentation contenant un hydrocarbure, comprenant l'étape de mise en contact de l'alimentation sous des conditions d'isomérisation avec une composition de catalyseur suivant l'une quelconque des revendications 1-4, 16 et 17.
